# EUROPEAN PATENT SPECIFICATION

(11) **EP 2 590 765 B1**
(45) Date of publication and mention of the grant of the patent: **25.04.2018**
(21) Application number: 11738460.2
(22) Date of filing: 08.07.2011
(51) Int. Cl.: B22F 1/00

(54) **METAL NANOPARTICLES**
METALLNANOPARTIKEL
NANOPARTICULES MÉTALLIQUES

(30) Priority: 09.07.2010 GB 201011660
(43) Date of publication of application: 15.05.2013
(73) Proprietor: Pro-1 NaNoSolutions OÜ (No. 14135689), 50409 Tartu (EE)
(72) Inventor: KARMAOUI, Mohamed, 3810-193 - Averiro (PT); RAUWEL, Protima, N-0349 Olso (NO); RAUWEL, Ervan, 0315 Oslo (NO)
(74) Representative: Sarap, Margus
(86) International application number: PCT/GB2011/001037
(87) International publication number: WO 2012/004573

(56) References cited:
- EP-A2- 1 698 413
- EP-A2- 1 952 919
- JP-A- 2007 100 117
- US-A1- 2007 034 052
- US-B2- 6 875 253
- Y. Bahari Mollamahale, D. Hosseini, S. K. Sadrnezhaad,: "Surfactant-Free Nonaqueous Route for Preparation of Metallic Nickel Nanoparticles", Proceedings of the 3rd conference on nanostructures (NS2010) March 10-12, 2010, Kish Island, Iran , 12 March 2010 (2010-03-12), pages 730-732, XP002663257, Retrieved from the Internet: URL:http://docs.sadrnezhaad.com [retrieved on 2011-11-10]
- V. TZITZIOS ET AL.: "Chemical synthesis and characterization of hcp Ni nanoparticles", NANOTECHNOLOGY, vol. 17, 3 July 2006 (2006-07-03), pages 3750-3755,

## Description

This invention relates to a process for the synthesis of high purity metal nanoparticles, the nanoparticles produced and their use, for example as catalysts or carriers.

Metal nanoparticles are an increasingly important industrial material. Due to their high surface area and high reactivity, metal nanoparticles may be used in a variety of applications, many of which arise from the improved behaviour and properties of nanomaterials. Particular applications for nanoparticles include catalysts, carriers, array waveguides, biosensors, nanoantennas, optical filters, drug delivery, synthesis of carbon nanotubes and metal hydrides, and hydrogen gas synthesis.

By nanoparticles and nano-thickness is meant a size below 1 micrometer, typically below 500nm and generally above 5nm.

Many techniques are currently used for nanoparticle synthesis, for example plasma or laser-driven gas phase reactions, evaporation-condensation mechanisms and wet chemical techniques. However, the existing methods all have drawbacks and no single technique currently provides a reliable, low-cost, simple method for production of metal nanoparticles of a controlled size. Typical problems with the existing methods include poor crystallinity or an unpredictable distribution of phases within the nanoparticles, and/or an inability to control the distribution of sizes around a desired nanoparticle size. Some methods also require expensive equipment or reagents.

Laser ablation synthesis, for example, has limitations in size control, as discussed by Amendola et al. in Phys. Chem. Chem. Phys. 11:3805-3821(2009). Methods like plasma chemical vapour deposition (CVD), are expensive, require very high temperatures and also have problems with size control of the nanoparticles. Wet chemistry methods require a stabiliser and/or surfactant, which increases the complexity and cost of synthesis and requires the activation of the formed nanoparticles in an additional activation step before they can be used. In addition, the precursors used in wet methods are typically metal alkoxides which are expensive, and metal chlorides, which lead to chlorine contamination and are therefore not optimal for microelectronics, nanoelectronics and most other applications of interest.

The document Y. Bahari Mollamahale et al. " Surfactant-free Non aqueous Route for preparation of Metallic Nickel Nanoparticles", Proceeding of the 3rd conference on nanostructures (NS2010) March 10-12, 2010, Iran relates to a process aimed at the preparation of metal nickel nanoparticles produced from Nickel acetylacetonate precursor and organic solvents including Benzyl alcohol, 1-hexanol and ethylene glycol. In said study the authors synthesized metal nickel nanoparticles using autoclaves, but the autoclaves they used is Teflon stainless steel which usually induced the formation of secondary phases. Said study is not sufficient to say if there is another phases using methods such x-ray photoelectron spectroscopy (XPS), Electron diffraction from Transmission Electron Microscopy study (ED) and if metal nickel nanoparticles are surfactant-free as they did not perform thermogravimetric analyses which is a routine technique of analysis that shows the presence of organic on the surface of the nanoparticles simply by heating them at high temperature. In fact, said study is incapable of showing whether the sample is pure and has no other phases such as NiO. XRD measurements only give the major phase and not the minority phase if it is less than 7% of the sample or if only the surface of the nanoparticles is oxidized.

In the document (EP 1 952 919 A2 (FUJIFILM CORP), 6 August 2008 is described a magnetic nanoparticles and aqueous colloid composition containing the same. This process of producing nanoparticles is based on an aqueous colloid. The example 1 describes the synthesis of iron platinum nanoparticles using iron acetate and platinum acetylacetonate mixed with oleic acid and oleyamine. Oleyamine is ans alkylamine and not an aryl or polycyclic amine. In the autoclave is added to the mixture 1,2 hexadecanediol and dioctyl ether. This patent is a method using aqueous colloids and use of alkylamine as solvent.

The document (US 6 875 253 B2, Daimon Hideo et al.) is related to a process of production of metal alloy fine particles (CuAu, Co-Pd...) from a salt or a complex of at least one transition metal selected from Fe and Co and one other selected from Pt or Pd dissolved in an organic solvent miscible with water or an alcohol. In addition, the resultant solution is heated under reflux in the presence an alcohol under inert atmosphere. Said patent is related to a method of synthesising metal nanoparticles under reflux in the presence an alcohol under inert atmosphere. Usually is used a glass balloon connected to a source of gas for pressurizing the flak and thus prevent any gas contamination from the ambient. This means that there is not used autoclaves during the process of synthesis.

The document V. Tzitzios et al.: "Chemical synthesis and characterization of hcp nanoparticles" published in Nanotechnology, vol. 17, p. 3750 in 2006 relates to the preparation of hexagonal metal nickel nanoparticles produced from Nickel nitrate (Ni(NO₃)₂) precursors and organic solvents including polyethylene glycol, oleic acid and oleyl amine. It should be pointed out that the hcp metal nanoparticles produced in this document are capped with oleic acid and oleyl amine that act as stabilizer.

In view of the problems of producing stable metal nanoparticles, there is a need for a simple, reliable and low cost method for producing crystalline metal nanoparticles without the use of a separate surfactant and which allows for control of the average particle size while minimizing the amount of variance in particle sizes.

Synthesis of different novel nanoparticles is a fundamental focal point of chemical research, and this interest is mandated by development in all areas of industry and technology. Synthesis of metal and alloy powders nanoparticles has been going on for centuries. Several procedures have been described for the synthesis of metal/bimetal nanoparticles; their catalytic and magnetic properties have been reported. A range of increasingly important chemical syntheses for nanoparticles are described. These syntheses are "chimie-douce" soft chemical, sol-gel autocombustion, template assisted synthesis, electrochemical reduction, aqueous route, Kirkendall effect, Magnetic-field-directed growth of nanocrystal and decomposition of metal organic precursor. Different strategies to produce well dispersed metal/bimetal nanocrystalline particules with tuneable size and shape such as spherical, nanopolyhedra, nanoplates, and nanodisks have been proposed.

Usually chemical reduction methods were used to synthesize metal/bimetal nanoparticles. Typical reducing agents include polyols , NaBH₄ or ascorbic acid and Gas phase synthesis .

Among various methods, chemical reduction of metal ions using surfactants or polymers as protective reagents is one of the promising ways to prepare metal nanoparticles. The polyol process is commonly used for preparation of easily reducible metals. The polyols, such as ethylene glycol, diethylene glycol or a mixture of them, can act as the reducing agents as well as solvents in which the metal salts can be dissolved.

### Summary of invention

In one aspect, the present invention provides a process for the production of metal nanoparticles comprising:
i. mixing an organic solvent comprising an aryl or polycyclic amine with at least one metal organic precursor; and
ii. heating the resulting mixture in a pressurised container.
iii. removing remaining organic residue

Preferably the process of the invention uses an organic solvent comprising an aromatic or polycyclic, preferably polyaromatic amine.

The metal organic precursor preferably comprises at least one metal hydrocarbyl compound, e.g. a metal acetate or metal acetyl-acetonate. The mixture can comprise organic precursors of at least two different metals or metal salts. It is preferred that at least one metal organic precursor comprises a transition metal selected from groups 4, 6 and 8 to 11, especially Co, Ni, Au, Ag, Pd, Pt, Cu, Rh and Ru.

In one embodiment, the mixture, e.g. a solution, is heated in the temperature range of 100 to 400 °C, preferably 160 to 300 °C. The mixture is typically heated for a time period of 1 to 72 hours, preferably 15 to 60 hours, more preferably 20 to 55 hours and most preferably around 48 hours.

In one embodiment of the invention the remaining organic residue are removed by rinsing the metal nanoparticles with a solvent, typically an organic solvent. For example absolute ethanol and/or dichlorometane.

Preferably the mixture formed in step (i) of the process of the invention does not comprise surfactants and/or stabilisers.

In another aspect, the invention provides metal nanoparticles produced by the process of the invention.

In a further aspect the invention provides the use of metal nanoparticles produced by the process of the invention, e.g. as catalysts or carriers.

In yet a further aspect, the invention provides nanoparticles of hexagonal close packed (hcp) nickel.

### Detailed Description

The present invention provides a process for synthesising highly crystalline metal nanoparticles in a one pot reaction. There is no need to use surfactants and/or stabilisers in the current method, and the particles produced have high purity and do not carry heteroatoms.

The process of the invention can be performed essentially in the absence of water. In non-aqueous conditions, traditional hydrolysis and condensation reactions are replaced by direct condensation or non-hydrolytic hydroxylation reactions. Organic solvents of varying viscosity and coordinating ability have been found to influence the final structure of the product.

In the process of the invention at least one metal organic precursor is mixed with an organic solvent to form a mixture.

The organic solvents suitable for this process include any aryl or polycyclic amine solvent in which the metal organic precursor(s) are soluble. Preferably the solvent will comprise an aromatic or polyaromatic amine. Preferred amines include aryl and polycyclic amines, diamines and triamines, but are preferably monoamines. More preferably these are aromatic and/or polyaromatic monoamines. Most preferably the solvent will comprise or consist of benzyl amine (C₆H₅CH₂NH₂) or a naphthyl alcohol or amine.

The term "polyaromatic" has its usual meaning herein, meaning a polycyclic aromatic compound, i.e. an aromatic cyclic compound with more than one loop or ring structure.

The term "aryl" has its usual meaning herein, meaning any functional group or substituent derived from a simple aromatic ring. For example, phenyl, thienyl, indolyl, naphthyl.

The choice of organic solvent can influence the crystal structure of the nanoparticle product. Aromatic amine solvents produce face centred cubic (fcc) structured cobalt nanoparticles (see Examples 1 and 2 below).

Where bulky solvents, e.g. aryl or polycyclic solvents, are used, the size (approximately 4-50nm) of the resulting nanoparticles may be advantageously controlled by selection of the solvent.

For any metal ion, any convenient metal organic precursor can be used if it is soluble. For example, it is possible to use nitrates, aryl-carboxylates and oxalates (/dioxalates) as metal precursors. Aryl-carboxylate and oxalate precursors should normally react in the same way as β-diketonate. Preferred compounds are salts of organic acids, especially hydrocarbyl salts such as acetates and acetylacetonates. Particularly preferred are metal acetates and/or acetylacetonates.

In theory, an organic precursor of any metal can be used in the process of the invention, but it is preferred that the metal is a transition metal. More preferably there is used at least one metal organic precursor of a metal selected from the group consisting of Co, Ni, Au, Ag, Pd, Pt, Cu, Rh and Ru.

It is possible to prepare bimetallic or trimetallic nanoparticles using the process of the invention, so organic precursors of more than one metal may be used. In one embodiment, organic precursors of at least two metals, for example Co and Pt), are used. In another embodiment, organic precursors of at least three metals are used.

The bimetallic particle formation solution can be formed in non-aqueous media. The solvent used and metal salts can be combined simultaneously or sequentially to induce nanoparticle formation.

Preferred metal organic precursors are:
Co(acetylacetonate)₂;
Co(acetate)₂;
Ni(acetylacetonate)₂;
Ni(acetate)₂, tetrahydrate;
Au(III)(acetylacetonate)(methyl)₂;
Ag(I)(acetate);
Pd(II)(acetylacetonate)₂;
Pt(II)(acetylacetonate)₂;
Cu(II)(acetylacetonate)₂;
Cu(I)(acetate);
Rh(III)(acetylacetonate)₃;
Rh(II)₂(acetate)₄, dimer;
Ru(III)(acetylacetonate)₃.
It is most preferred if one or more of these precursors are combined with benzyl amine. There must be a sufficient amount of solvent to dissolve the metal precursor, preferably at least 60% of the metal precursor is dissolved, more preferably 80-90%, and most preferably 95-100% of the metal precursor is dissolved.

The solvent and precursor are preferably mixed and loaded into the pressurized container under an inert atmosphere, for example, in a glove box.

The mixture of organic solvent and metal organic precursor is heated in the pressurised container.

Preferably the mixture is heated in the temperature range of 100 to 400 °C, preferably 160 to 300 °C, more preferably 160-240 °C and most preferably 180-200 °C. The mixture is typically heated for a time period of 1 to 72 hours, preferably 15 to 60 hours, more preferably 20 to 55 hours, and most preferably approximately 48 hours. In the preferred reaction conditions the mixture is heated at 200 °C for 48 hours.

Under equivalent reaction conditions, preferably with a reaction time of 48 hours, and where a substrate is disposed in the autoclave, it is possible to deposit a nano-thickness surface coating onto the substrate, e.g. a sheet, bead, rod, or mesh. For many applications, especially as catalysts, it is desirable to use such surface coated substrates and this modification of the process of the invention forms a further aspect of the invention. Viewed from this aspect the invention provides a method of providing a nano-thickness surface metal coating on a substrate, said method comprising:
i. mixing an organic solvent comprising an aryl or polycyclic amine with at least one metal organic precursor;
ii. heating the resulting mixture in a pressurised container containing or providing said substrate, and
iii. optionally removing organic residue from the resulting metal coated substrate.

The coating may cover at least 50% of the surface of the substrate, for example at least 60%, 70%, 80% of the surface of the substrate. Preferably the coating will cover at least 90% of the surface of the substrate, for example at least 95%, 98% or 99% of the substrate surface.

In another aspect the coating may consist of discrete metal nanoparticles or aggregates of metal nanoparticles. The nanoparticles typically have diameters in the range of 1-100 nm, preferably 2-50 nm, more preferably 3-20 nanometers. For example 4-15 nm, such as 5-10 nm. The metal nanoparticle aggregates typically have an overall diameter in the range 50-500 nm, for example they may be approximately 100, 200, 300 or 400 nm in diameter.

Viewed from this aspect the invention provides a method of providing metal nanoparticles on the surface of a substrate, said method comprising:
i. mixing an organic solvent comprising an aryl or polycyclic amine with at least one metal organic precursor;
ii. heating the resulting mixture in a pressurised container containing or providing said substrate, and
iii. optionally removing organic residue from the resulting metal nanoparticle coated substrate.

The resulting coated substrates and their use form further aspects of the invention.

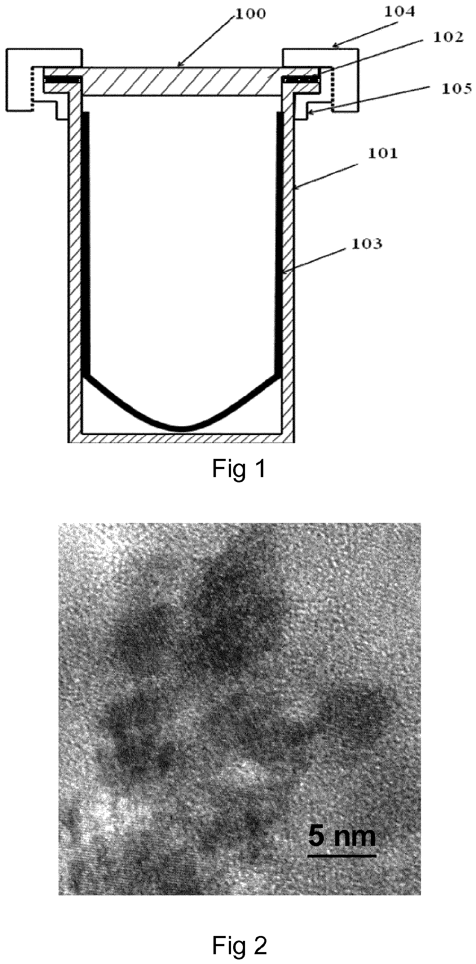

The pressurized container is a vessel capable of withstanding the internal pressures generated during the reaction (see Walton et al. in Chem. Soc. Rev. 31: 230-238 (2002), Figure 1). For example, the container should be able to withstand internal pressures of 2-300 bar. Typically the pressurised container used is an autoclave. The reactants are used in amounts appropriate to the volume of the autoclave. In the examples the autoclaves used are of a size appropriate to laboratory research, but the skilled person would be able to scale up the process of the invention for commercial autoclaves.

After the reaction, any remaining organic residue can be removed from the nanoparticle product by standard rinsing and separation techniques. For example, washing with ethanol and/or dichloromethane and centrifuging.

The current process allows "one pot" synthesis of metal nanoparticles at low temperatures without the utilization of surfactant and/or stabiliser. Usually metal nanoparticles synthesised by the existing techniques are not stable in air and oxidise immediately in the presence of oxygen or an oxidising source. In contrast, the metal nanoparticles produced by the current process are stable under air and in oxygen at room temperature (i.e. approximately 18-25 °C, such as 20-22 °C), preferably for a period of at least 1-24 months, for example 2-18 months, 3-12 months or 4-10 months, preferably at least approximately 6 months.

The use of a surfactant to improve the stability of the nanoparticles during the current process is unnecessary. Nanoparticles produced by the existing wet chemical methods have a coating of surfactant on their surface, which must be removed by calcination at high temperature (600-1000 °C). This high temperature treatment generally induces agglomeration/coalescence of the nanoparticles and also hinders its numerous applications.

Stabilisers are generally used in existing methods to control the agglomeration/coalescence of the nanoparticles, thus the formed nanoparticles have a coating of stabiliser on their surface. This must be removed in a series of treatments, which lead to contamination and an organic surface residue which is detrimental for applications.

The presence of surfactants/stabilisers usually passivates the surface of the nanoparticles, preventing their integration in an industrial process or application. The additional treatments which are necessary to remove stabilisers/surfactants also incur additional costs in terms of time and expense.

Therefore it is a particular advantage that the process of the invention does not require the use of surfactant and/or stabiliser, as the oxidation-resistant nanoparticles of the current invention do not require calcination or other activation steps before they can be used.

The metal nanoparticles produced by the process of the invention differ from those produced by existing methods by virtue of their high crystallinity and stability to oxidation.

Particles of cobalt are generally in the range of 8-15 nm in diameter, while nickel nanoparticles are approximately 50 nm in diameter.

However, depending on the growth conditions, it was observed that the synthesis inside a nanoporous inert structure such as γ-alumina particles induces a confinement effect (Example 11 describe the synthesis of metal Co nanoparticles on and into nanoporous γ-alumina). It was also possible to produce in the same condition Ni metal fcc nanoparticles of approximately 5 nm in diameter (Figure 2).

CoPt₃ as a bimetallic (example 8 and 9) compound was synthesized at 180°C using Pt(acac)₂ and benzylamine as solvent to obtain bimetallic nanoparticles. Nanoparticles synthesized by both solvents were moderately monodispersed. The formation of "solid solution" type alloys such as CoPt₃ bimetallic nanoparticles was confirmed by XRD as shown in figures 12 and 13. From a full-width at half-maximum of diffraction peak due to CoPt₃ metal at 2θ ≈ 40.51° and 2θ ≈ 40.95° for both samples, respective average crystallite sizes of 5.51 and 4.63 nm of bimetallic CoPt₃ were estimated using the Scherrer equation.

In developing the process of the invention, the inventors have also produced nickel nanoparticles which have a hexagonal close packed structure. The surface chemistry and properties of these particles will differ from face-centred cubic (fcc) nickel nanoparticles.

### Description of Figures

Figure 1. Pressurized container 100: Stopper, 101: Container, 102: Teflon sealing ring, 103: Glass tube, 104: Upper part of the stainless-steal sealing bolt, 105: Lower part of the stainless-steal sealing bolt.
Figure 2. TEM image of Ni metal fcc nanoparticles produced in a nanoporous structure.
Figure 3. X-ray diffraction (XRD) patterns showed the Co metal cubic structure in nanoparticles produced in Example 1.
Figure 4. X-ray diffraction (XRD) patterns showed the Co metal cubic structure in nanoparticles produced in Example 2.
Figure 5. X-ray diffraction (XRD) patterns showed the Ni metal cubic structure in nanoparticles produced in Example 4.
Figure 6. X-ray diffraction (XRD) patterns showed the Ni metal cubic structure and the Ni metal hexagonal structure in nanoparticles produced in Example 6.
Figure 7. X-ray diffraction (XRD) patterns showed the CoPt₃ metal cubic structure and Pt metal cubic structure in nanoparticles produced in Example 8.

All XRD patterns were produced using Cu-alpha radiation.

### Examples

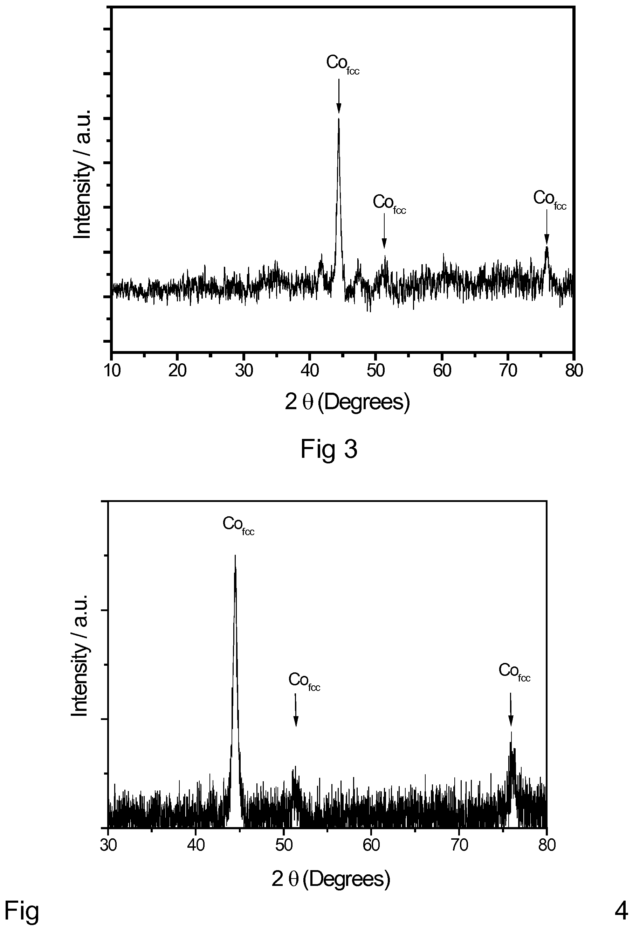

The X-ray diffractometer used to collect the data shown in figures 3, 5, 7, 8, 9, 10, 12, 13, 14 and 15 is a Scintag PDS 2000 diffractometer with a Cu Kα X-ray source (A = 1.54 Å) in step-scan mode with a scanning rate of 0.02 deg s⁻¹ in the 2θ range from 3° to 90°. For figure 4 a Philips X'Pert four-circle MPD diffractometer with Cu Kα X-ray source (A = 1.54 Å) was used.

### Example 1: Cobalt metal cubic fcc nanoparticles synthesis using Co(acetylacetonate)₂ and benzyl amine.

The synthesis procedures were carried out in a glove box (O₂ and H₂O < 1 ppm). In a typical synthesis, Co(acetylacetonate)₂ (97%, Aldrich) (acetylacetonate: CH₃COCHCO⁻CH₃) 500 mg were added to 20 mL benzyl amine (≤99.5%, Aldrich) (Benzyl amine: C₆H₅CH₂NH₂). Once the solution clarified, the reaction mixture was transferred into a stainless steel autoclave and carefully sealed. Thereafter, the autoclave was taken out of the glove box and heated in a furnace at 180 °C for 48 hours. The resulting milky suspensions were centrifuged at 5000 turns/minute for 10 minutes. The precipitate was thoroughly washed once with ethanol (CH₃CH₂OH) and then centrifuged at 5000 turns/minute for 10 minutes; then washed twice with dichloromethane (CH₂Cl₂) and centrifuged at 5000 turns/minute for 10 minutes. The precipitate was subsequently dried in air at 60 °C.

Figure 3 shows X-ray diffraction (XRD) patterns for the product, showing the Co metal cubic structure.

### Example 2: Cobalt metal cubic fcc nanoparticles synthesis using Co(acetate)₂ and benzyl amine.

The synthesis procedures were carried out in a glove box (O₂ and H₂O < 1 ppm). In a typical synthesis, Co(acetate)₂ anhydrous, (Alfa Aesar) (acetate: CH₃COO⁻) 500 mg were added to 20 mL benzyl amine (≤99.5%, Aldrich) (Benzyl amine: C₆H₅CH₂NH₂). Following stirring, the reaction mixture was transferred into a stainless steel autoclave and carefully sealed. Thereafter, the autoclave was taken out of the glove box and heated in a furnace at 240 °C for 72 hours. The resulting milky suspensions were centrifuged at 5000 turns/minute for 10 minutes. The precipitate was thoroughly washed once with ethanol (CH₃CH₂OH) and then centrifuged at 5000 turns/minute for 10 minutes; then washed twice with dichloromethane (CH₂Cl₂) and centrifuged at 5000 turns/minute for 10 minutes. The precipitate was subsequently dried in air at 60 °C.

Figure 4 shows X-ray diffraction (XRD) patterns for the product, showing the Co metal cubic structure.

### Example 4: Ni metal cubic fcc nanoparticles synthesis using Ni(acetylacetonate)₂ and benzyl amine.

The synthesis procedures were carried out in a glove box (O₂ and H₂O < 1 ppm). In a typical synthesis, Ni(acetylacetonate)₂ (95%, Aldrich) (acetylacetonate: CH₃COCHCO⁻CH₃) 500 mg were added to 20 mL benzyl amine (≤99.5%, Aldrich) (Benzyl amine: C₆H₅CH₂NH₂). Following stirring, the reaction mixture was transferred into a stainless steel autoclave and carefully sealed. Thereafter, the autoclave was taken out of the glove box and heated in a furnace at 180 °C for 48 hours. The resulting milky suspensions were centrifuged at 10000 turns/minute for 10 minutes. The precipitate was thoroughly washed once with ethanol (CH₃CH₂OH) and then centrifuged at 10000 turns/minute for 10 minutes; then washed twice with dichloromethane (CH₂Cl₂) and centrifuged at 10000 turns/minute for 10 minutes. The precipitate was subsequently dried in air at 60 °C.

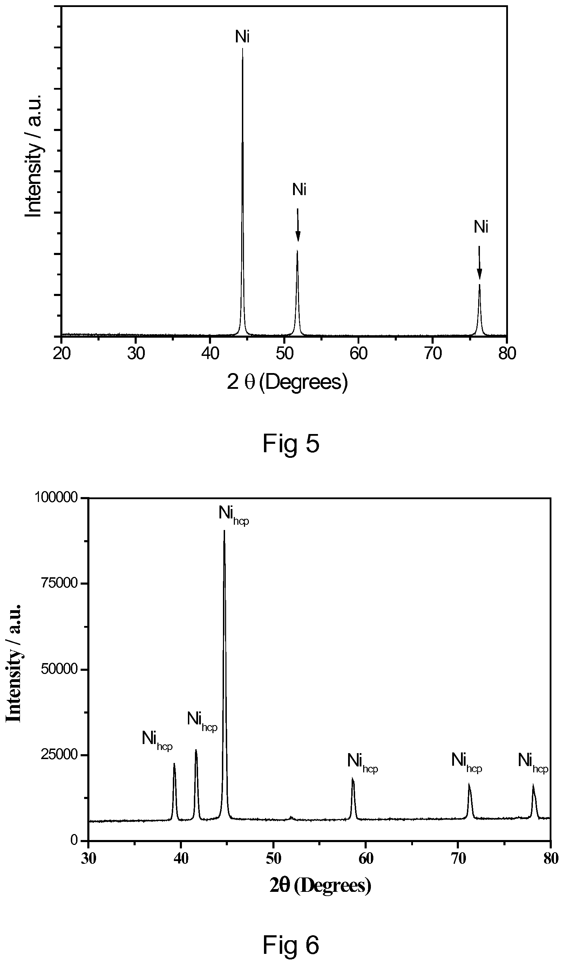

Figure 5 shows X-ray diffraction (XRD) patterns, showing the Ni metal cubic structure of the product.

### Example 6: Ni metal hexagonal hcp nanoparticles synthesis using Ni(acetate)₂, tetrahydrate and benzyl amine.

The synthesis procedures were carried out in a glove box (O₂ and H₂O < 1 ppm). In a typical synthesis, Nickel (acetate)₂, tetrahydrate (99.999, STREM) (acetate: CH₃COO⁻) 500 mg were added to 20 mL benzyl amine (≤99.5%, Aldrich) (Benzyl amine: C₆H₅CH₂NH₂). Following stirring, the reaction mixture was transferred into a stainless steel autoclave and carefully sealed. Thereafter, the autoclave was taken out of the glove box and heated in a furnace at 240 °C for 48 hours. The resulting milky suspensions were centrifuged at 10000 turns/minute for 10 minutes. The precipitate was thoroughly washed once with ethanol (CH₃CH₂OH), then centrifuged at 10000 turns/minute for 10 minutes, and then washed twice with dichloromethane (CH₂Cl₂) and centrifuged at 10000 turns/minute for 10 minutes. The precipitate was subsequently dried in air at 60 °C.

Figure 6 shows X-ray diffraction (XRD) patterns of the product showing the Ni metal hexagonal structure.

### Example 8: CoPt₃ metal nanoparticles synthesis using Co(acetylacetonate)₂, Pt(acetylacetonate)₂ and benzyl amine.

The synthesis procedures were carried out in a glove box (O₂ and H₂O < 1 ppm). In a typical synthesis, Co(acetylacetonate)₂ (97%, Aldrich) (acetylacetonate: CH₃COCHCO⁻CH₃) 394 mg and Pt(acetylacetonate)₂ (98%, STREM) 603 mg were added to 20 mL benzyl amine (≤99.5%, Aldrich) (Benzyl amine: C₆H₅CH₂NH₂). Following stirring, the reaction mixture was transferred into a stainless steel autoclave and carefully sealed. Thereafter, the autoclave was taken out of the glove box and heated in a furnace at 180 °C for 48 hours. The resulting milky suspensions were centrifuged at 10000 turns/minute for 10 minutes. The precipitate was thoroughly washed once with ethanol (CH₃CH₂OH) and then centrifuged at 10000 turns/minute for 10 minutes, then washed twice with dichloromethane (CH₂Cl₂) and centrifuged at 10000 turns/minute for 10 minutes. The precipitate was subsequently dried in air at 60 °C.

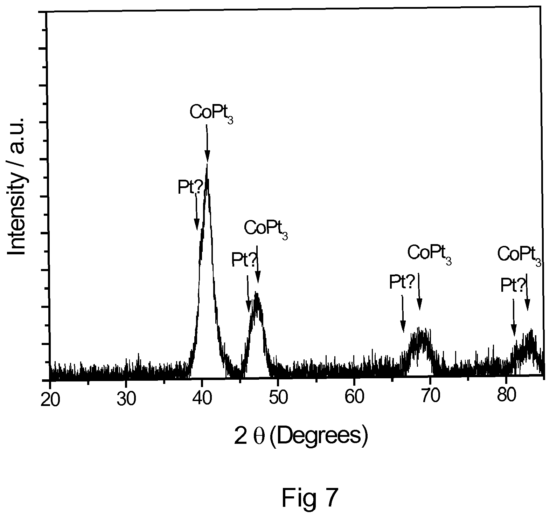

Figure 7 shows X-ray diffraction (XRD) patterns of the product showing the CoPt₃ metal cubic structure and Pt metal cubic structure.

The present invention provides a nano-thickness surface metal coating on a substrate and a substrate having a nano-thickness metal coating, by adding the said substrate in the pressurized container before the heating process and then removing organic residue from the resulting metal coated substrate. Alternatively the present invention provides a process of application metal nanoparticles on the surface of a substrate and a substrate having metal nanoparticles on the surface, by adding the said substrate in the pressurized container before the heating process and then removing organic residue from the resulting metal nanoparticle coated substrate.

The substrate covered with the nanoparticles can be used as a catalyst.

## Claims

1. A process for the production of metal nanoparticles comprising:
i. mixing an organic solvent comprising an aryl or polycyclic amine with at least one metal organic precursor; and
ii. heating the resulting mixture in a pressurised container; and
iii. removing remaining organic residue.

2. The process according to claim 1 wherein said polycyclic organic solvent comprises a polyaromatic amine.

3. The process according to anyone of the preceding claims wherein said metal organic precursor comprises at least one metal-hydrocarbyl compound.

4. The process according to claim 3 wherein said metal organic precursor comprises at least one metal acetate or metal acetyl-acetonate.

5. The process according to anyone of the preceding claims wherein said metal organic precursor comprises a metal selected from groups 4, 6 and 8 to 11.

6. The process according to claim 5 wherein said metal organic precursor comprises a metal selected from Co, Ni, Au, Ag, Pd, Pt, Cu, Rh and Ru.

7. The process according to any preceding claim wherein said mixture comprises metal organic precursors of at least two different metals.

8. The process according to any preceding claim wherein the mixture is heated in the temperature range of 100 to 400 °C, preferably 160 to 300 °C.

9. The process according to any preceding claim wherein the mixture is heated for a time period of 1 to 72 hours, preferably 15 to 60 hours, more preferably 20 to 55 hours.

10. The process according to claim 1 wherein the remaining organic residue is removed by rinsing the metal nanoparticles with a solvent.

11. The process according to any preceding claim wherein said mixture is essentially free from surfactants and stabilisers.

12. The process according to claim 1 or 2 where the metal nanoparticles are applied on the surface of substrate and substrate having metal nanoparticles on the surface is added in the pressurized container before the heating process, and then the organic residue is removed from the resulting metal coated substrate.

## Patentansprüche

1. Verfahren zur Herstellung von Metall-Nanopartikeln bestehend aus:
i. Mischen eines organischen Lösungsmittels, bestehend aus einem Aryl- oder polyzyklischen Amin mit wenigstens einem metallorganischen Ausgangsstoff; und
ii. Erhitzen der sich daraus ergebenden Mischung in einem unter Druck gesetzten Behältnis; und
iii. Entfernen des verbleibenden organischen Rückstands.

2. Verfahren nach Anspruch 1, worin das benannte polyzyklische, organische Lösungsmittel ein polyaromatisches Amin umfasst.

3. Verfahren nach irgendeinem der vorangegangen Ansprüche, worin der benannte, metallorganische Ausgangsstoff wenigstens aus einer Restverbindung Metall-Kohlenwasserstoffs besteht.

4. Verfahren nach Anspruch 3, worin der benannte metallorganische Ausgangsstoff aus wenigstens einem Metallazetat oder einer Metall-Acetyl Verbindung mit Aceton besteht.

5. Verfahren nach irgendeinem der vorangegangen Ansprüche, worin der benannte, organische Ausgangsstoff aus einem Metall, ausgewählt aus den Gruppen 4, 6 und 8 bis 11, besteht.

6. Verfahren nach Anspruch 5, worin der benannte, metallorganische Ausgangsstoff ein Metall, das aus Co, Ni, Au, Ag, Pd, Pt, Cu, Rh und Ru ausgewählt wird, umfasst.

7. Verfahren nach irgendeinem vorangegangenen Anspruch, worin die benannte Mischung metallorganische Ausgangsstoffe aus wenigstens zwei unterschiedlichen Metallen umfasst.

8. Verfahren nach irgendeinem Anspruch, worin die Mischung in einem Temperaturbereich zwischen 100 und 400°C, vorzugsweise 160 bis 300°C, erhitzt wird.

9. Verfahren nach irgendeinem vorangegangen Anspruch, worin die Mischung für einen Zeitraum von 1 bis 72 Stunden, vorzugsweise 15 bis 60 Stunden, aber eher vorzugsweise 20 bis 55 Stunden, erhitzt wird.

10. Verfahren nach Anspruch 1, worin der verbleibende organische Rest durch Spülen der Metall-Nanopartikel mit einem Lösungsmittel entfernt wird.

11. Verfahren nach irgendeinem Anspruch, worin die benannte Mischung im Grunde frei von Tensiden und Stabilisatoren ist.

12. Verfahren nach Anspruch 1 oder 2, worin die Metall-Nanopartikel auf die Oberfläche des Trägers aufgetragen werden, der Träger den Metall-Nanopartikel auf die Oberfläche des unter Druck gesetzten Behälters vor dem Erwärmungsvorgang hinzugefügt hat, und dann der organische Rest vom sich daraus ergebenden metallbeschichteten Träger entfernt wird.

## Revendications

1. Procédé pour la production de nanoparticules métalliques comprenant :
i. mélanger un solvant organique comprenant une amine aryle ou polycyclique avec au moins un précurseur organique métallique ; et
ii. chauffer le mélange résultant dans un récipient sous pression ; et
iii. enlever les résidus organiques restants.

2. Procédé selon la revendication 1, dans lequel ledit solvant organique polycyclique comprend une amine poly aromatique.

3. Procédé selon l'une quelconque des revendications précédentes, dans lequel ledit précurseur organique métallique comprend au moins un composé métal-hydrocarbyle.

4. Procédé selon la revendication 3, dans lequel ledit précurseur organique métallique comprend au moins un acétate métallique ou acétylacétonate métallique.

5. Procédé selon l'une quelconque des revendications précédentes, dans lequel ledit précurseur organique métallique comprend un métal choisi parmi les groupes 4, 6 et 8 à 11.

6. Procédé selon la revendication 5, dans lequel ledit précurseur organique métallique comprend un métal choisi parmi Co, Ni, Au, Ag, Pd, Pt, Cu, Rh et Ru.

7. Procédé selon l'une quelconque des revendications précédentes, dans lequel ledit mélange comprend des précurseurs organiques de métaux d'au moins deux métaux différents.

8. Procédé selon l'une quelconque des revendications précédentes, dans lequel le mélange est chauffé dans la plage de température de 100 à 400 °C, de préférence de 160 à 300 °C.

9. Procédé selon l'une quelconque des revendications précédentes, dans lequel le mélange est chauffé pendant une période de temps de 1 à 72 heures, de préférence de 15 à 60 heures, plus préférablement de 20 à 55 heures.

10. Procédé selon la revendication 1, dans lequel le résidu organique restant est éliminé par rinçage des nanoparticules métalliques avec un solvant.

11. Procédé selon l'une quelconque des revendications précédentes, dans lequel ledit mélange est essentiellement exempt de tensioactifs et de stabilisants.

12. Procédé selon la revendication 1 ou 2, dans lequel les nanoparticules métalliques sont appliquées sur la surface du substrat et le substrat comportant des nanoparticules métalliques sur la surface est ajouté dans le récipient pressurisé avant le chauffage, puis le résidu organique est éliminé du métal revêtu résultant substrat.
